# EUROPEAN PATENT SPECIFICATION

(11) **EP 1 348 622 B1**
(45) Date of publication and mention of the grant of the patent: **07.06.2006**
(21) Application number: 03075547.4
(22) Date of filing: 24.02.2003
(51) Int. Cl.: B64C 13/10, B64C 13/46

(54) **Aircraft control surface controller and associated method**
Steueranordnung für Steuerflächen eines Flugzeuges und dazugehörendes Verfahren
Dispositif de commande pour gouverne d'aéronef et procédé associé

(30) Priority: 29.03.2002 US 112815
(43) Date of publication of application: 01.10.2003
(73) Proprietor: The Boeing Company, Seattle, Washington 98124-2207 (US)
(72) Inventor: Huynh, Neal V., Bellevue, WA 98006 (US)
(74) Representative: Land, Addick Adrianus Gosling

(56) References cited:
- US-A- 3 699 369
- US-A- 4 403 756
- US-A- 5 059 882
- US-A- 5 264 768

## Description

The present invention relates to aircraft control surface controllers, and, more particularly, to an active flight control suppressing method and variable resistance damper that reduces a pilot's authority over the control system as the frequency of the pilot control input increases. The variable resistance damper of the present invention can be installed in a flight control system between other flight body parts.

In an aircraft, the amplitude of the aerodynamic forces due to the speed and span of the aircraft makes it impossible to operate the control surfaces directly. In fact, the necessary forces are produced by hydraulic servo actuators whose irreversibility prevents the transmission of aerodynamic reactions back to a pilots' controls. These hydraulic servo actuators all have rate limits due to limits in hydraulic supply, etc. In order to provide the pilot with the reaction forces required for correct flying of the aircraft with hydraulic servo actuators, an artificially induced 'feel' system is located in the control linkages. This 'feel' is extremely important in that it provides a tactile feedback to the pilot. In aircraft control systems, the rotary or linear jam override device is used in connection with the hydraulic servo actuators or system linkages. The rotary or linear jam override device permits the pilot to override a jammed hydraulic servo actuator or system linkages. As one hydraulic servo actuator or system linkage jams, the jam override device slips at a preset pilot input force and enables the pilot to operate the remaining actuators or sys tem linkages.

A common problem of the above systems includes pilot-induced-oscillation (PIO) or pilot-airplane-coupling (APC). Generally, pilot-induced-oscillation occurs as a result of unusually high pilot control input rates provided to the control surface hydraulic servo actuators. This occasionally occurs when the pilot is engaged in demanding tasks while diligently maneuvering the aircraft at an unusually high input rates. Consequently, the response of the control surface actuators become rate limited. The actuator rate limiting results in a slippage condition of the jam override device. In the slippage condition, the spring force of the jam override device and the reaction force from artificial feel system are out of phase which results in a drop off of reaction force for the pilot. This causes the pilot to make an overcorrection that results in a large reverse correction, and subsequently oscillation if the process is repeated. The higher rate of pilot control input therefore aggravates the pilot-induced-oscillation.

Pilot-induced-oscillation (PIO) or pilot-airplane-coupling (APC) has long been recognized as a significant effect regarding aircraft control instability. Many in the field have studied the effects of pilot-induced-oscillation and developed general criteria and aircraft specific criteria for estimating expected flight results. From these criteria, systems have been developed to suppress pilot-induced-oscillation due high control input rates. However, these models have yet to provide a solution to actually limiting the phenomena at the source, the pilot and the control surface interface.

One damping system developed for the Boeing 777, manufactured by The Boeing Company of Seattle, Washington, comprised a rotary hydraulic damper to provide damping in the fly-by-wire control systems. Another damping system developed for the Boeing 757-300 also comprised a rotary hydraulic damper to reduce the effect of pilot induced oscillation on the elevator mechanical control systems. The hydraulic damper consists of a shaft with one or more integral vanes and a cylindrical housing with two or more compartments. A typical rotary hydraulic damper has two shaft vanes and four chambers. Opposite chambers are connected and the two pairs are connected by porting fluid through a throttle valve. Relative rotation between the shaft and housing displaces fluid from one pair of chambers through the throttling valve into the other pair of chambers. The porting of the throttling valve and the relative rotation produces the resistance (so called linear damping force) relative to the input rotation and impedes the undesired high rate input.

The hydraulic damper worked well for its intended purpose on the 777 fly-by-wire control systems and 757-300 elevator control system, however, the linear damping force as well as the damping rate, response time, and control proscribe its use with other flight control systems. Neither of these systems provided damping relative to the input rate of the control surface interface. More particularly, many lateral mechanical control systems must have both a low control break out force (control break out force is defined as the pilot input force to initiate the first control surface movement) and an unchanged reaction force during normal aircraft operation. The prior hydraulic damper systems increased both the control break out force and the reaction forces in normal aircraft operation. The prior hydraulic dampers were suitable for fly-by-wire control systems because those control systems do not use control cable, pulleys, quadrants and control linkages between the pilot controller and the hydraulic servo actuators. Also, another primary problem associated with hydraulic dampers has been the mechanical seals, which retain the viscous fluid in the damping chamber. These seals are subject to wear and eventually leak resulting in a loss of the damping fluid. Loss of the fluid degenerates the damping effectiveness of the hydraulic damper.

US-A-3 699 369 discloses an aircraft control surface controller for controlling aerodynamic control surface on an aircraft comprising control surface interface having a range of motion for providing pilot input for positioning the aerodynamic control surfaces on an aircraft and a variable resistance damper mechanically interconnected to the pilot control surface interface, wherein the damper provides physical resistance to the control surface interface, the damper physical resistance increasing proportional to a rate of movement of the control surface interface.

Also US-A-5 264 768 discloses these features.

The present invention provides a control surface controller and method of controlling a control surface interface in order to effectively limit the rate of input to the control surface interface thus preventing pilot-induced-oscillation. The control surface interface provides pilot input for positioning aerodynamic control surfaces on an aircraft. Generally an aircraft includes many aerodynamic control surfaces including ailerons, spoilers, flaps, elevators, and rudders. Any one or more of these control surfaces are responsive to the control surface interface. Also interconnected to the control surface interface is a variable resistance damper. The variable resistance damper provides rate dead zone and physical resistance to the control surface interface proportional to its rate of movement. The rate dead zone may advantageously be selected in order to provide proportional physical resistance to the control surface interface during high input rates, which tend to lead to pilot-induced-oscillation.

A variable resistance damper with a rate dead zone is provided. In the rate dead zone, the variable resistance damper generates no damping force so the control break out force and reaction forces in normal aircraft operation are not affected. The variable resistance damper is basically transparent to the pilot in normal aircraft operation. Beyond the rate dead zone, the variable resistance damper generates the damping force as well as the response time between damping engaged and damping disengaged is much faster than the presently used hydraulic damper. Thus, the enhanced lateral mechanical control system requirements have created an invention for which an active suppressing method using a variable damper reduces the pilot's authority over the control system as the frequency of the pilot control input increases.

Another aspect of a control surface controller and method of controlling a control surface interface includes a rotary or linear jam override device interconnecting one of two or more control surface controllers and the control surface interface which allows a jammed actuator or linkage to be removed from the system in order to operate the unjammed actuators or linkages. Typically, the rotary jam override device comprises a roller and a heart shaped cam of which the roller is normally positioned at the cam detent and is preloaded by the spring force. Pogo or spring rod is one form of the linear jam override device.

In many applications of the control surface controller and method of controlling a control surface interface it is desirable that the variable resistance damper is included. Various types of variable resistance dampers may be used. One advantageous embodiment employs an electric motor. More specifically, one embodiment includes a direct current brushless motor -generator combination. Another embodiment employs magnetic field restraint on a rotor, such as in an eddy current drag device. In other applications of a control surface controller and method of controlling a control surface interface it is desirable that the variable resistance damper comprises a mechanical brake. One embodiment of the mechanical brake comprises a centrifugal friction braking mechanism.

Each of these embodiments are particularly well suited to providing the desirable torque and rate proportionality in an efficient and self-contained manner. That is to say that each embodiment may be self powered and therefore independent of external power sources, thus advantageously improving reliability. However, other embodiments may comprise external power and external controls in order to provide variable resistance damping, as well.

Additionally, it is often desirable to control shaft torque of the variable resistance damper at a higher rate, while at the lower rate there is no damping torque. Therefore, one embodiment of a control surface controller and method of controlling a control surface interface further comprises a mechanical gear train interconnecting the control surface interface and the variable resistance damper. The mechanical gear train provides a speed increasing from the damper input shaft to the damper.

Generally, the mechanical control surface controller and method of controlling a control surface interface may include mechanical linkages, such as a cable, pulley, and quadrant system interconnecting the control surface interface and an actuator for actuating a control surface. Alternatively, the fly-by-wire control surface controller and method of controlling a control surface interface may also include electromechanical devices, such as electromechanical trim actuators and fly-by-wire control transducers, interconnecting the control surface interface and an electro-hydraulic servo actuator for actuating a control surface.

Another aspect of the present invention also provides a method of controlling the rate of a pilot control surface interface in order to effectively limit the rate of pilot input to the control surface interface thus preventing the pilot-induced-oscillation condition. In this regard, the method comprises receiving an input rate from the control surface interface and in return applying a physical resistance to the control surface interface. The physical resistance is proportional to the pilot input rate.

The physical resistance to the control interface begins once the control surface interface has moved beyond one or more of an initial damping criteria. One initial damping criterion corresponds to a predetermined rate of the control surface interface. Another initial damping criterion may additionally correspond to a predetermined position of the control surface interface from a nominal position of the control surface interface. The initial damping criteria are selected based upon the physical control system response properties and aerodynamic effect properties of the control surfaces in response to the control surface interface, generally in relation to pilot-induced-oscillation condition.

Therefore, the present invention builds on the technique of active damping to provide a system and method that suppress a pilot-induced-oscillation condition on large transport aircraft that is caused by control system rate limiting. To effectively limit the high rate input during flight, the present invention employs a system comprising a self-contained variable resistance damper that can be installed in a flight control system by insertion between other flight body parts. The method of active damping of the present invention is intended to be completed before the occurrence of flight control system rate limiting condition thereby preventing pilot-induced-oscillation condition.

It is also advantageous to control the input rate of the damper beyond a threshold of initial damping criteria. That is to say that damping does not begin until the control surface input exceeds the initial damping criteria. One initial damping criterion corresponds to a predetermined rate of the control surface interface. Generally, at input rates below the predetermined rate pilot-induced-oscillation is not a significant problem, and therefore damping may not be required. Another initial damping criteria is a predetermined position of the control surface interface from a nominal position. This aspect is relevant for applications where small movements are not significant factors contributing to pilot induced oscillation.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
Figure 1 is a schematic of a prior art aircraft control surface control controller system;
Figure 2 is a plan view of an aircraft having control surfaces operated by a control surface controller;
Figure 3 is a schematic of a control surface controller according to one embodiment of the represent invention;
Figure 4 is a graph illustrating a shaft torque and shaft rate characteristic for a damper according to one embodiment of the present invention;
Figure 5 is a frontal view of a damper having a rotor according to one embodiment of the present invention;
Figure 6 is a block diagram of a variable resistance damper and a gear train according to one embodiment of the present invention;
Figure 7 is a block diagram of an eddy current drag device damper according to one embodiment of the present invention;
Figure 8 is a schematic diagram illustrating the operation of a motor-generator damper according to one embodiment of the present invention; and
Figure 9 is a block diagram illustrating the operation of a centrifugal brake damper according to one embodiment of the present invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention as defined by the claims to those skilled in the art. Like numbers refer to like elements throughout.

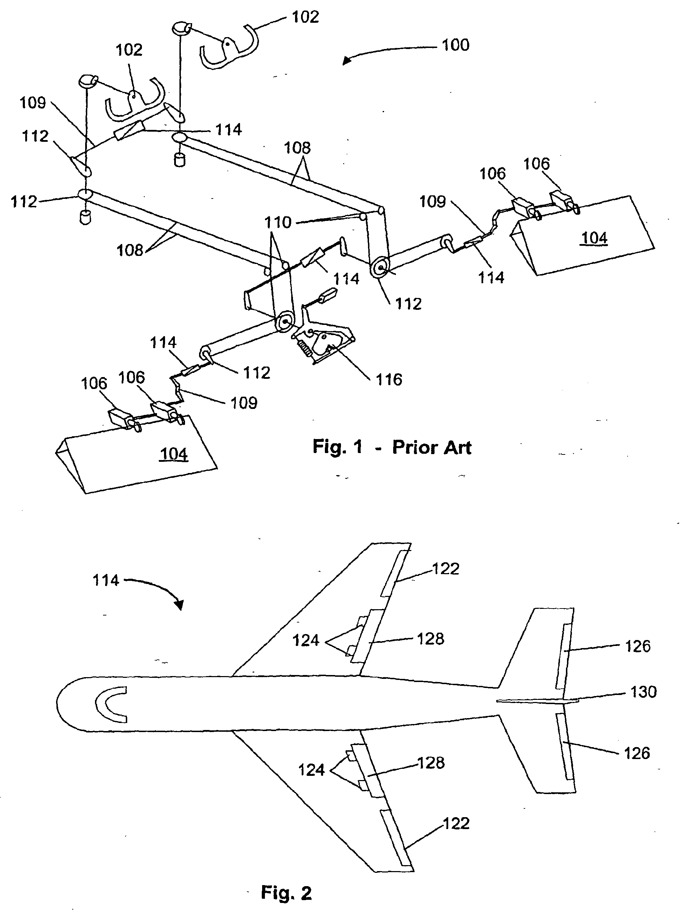

Referring now to Figure 1, a typical aircraft control surface control system **100** is illustrated. The system generally includes a control surface interface **102** or a pair of control surface interfaces **102**, such as control wheels, control sticks, yokes, or pedals. The control surface interface **102** is connected to the aerodynamic control surface **104** and the control surface actuators **106** via mechanical linkages, such as cables **108**, pulleys **110**, cable quadrant **112**, and linkages **109** for translating the motion of the control surface interface **102** to the actuators **106**. The actuators **106** maneuver the aerodynamic control surfaces **104** to a position corresponding to the input of the interface **102** as desired by the pilot. Often the actuators **106** include hydraulic actuators or the like. As illustrated, one control surface interface **102** may control more than one aerodynamic control surface **104**, for example a control wheel typically controls ailerons on the port and starboard wings. Additionally, a feel system **116**, typically providing linear resistance based strictly on position, is also provided.

Additionally, a typical aircraft control surface control system **100** also includes one or more jam override devices **114** within the mechanical linkages, especially when one control surface interface **102** controls more than one aerodynamic control surface **104** or when redundant systems are incorporated. When an actuator **106** fails to a jammed condition, a jam override device **114** permits operation of unjammed actuators by removing the jammed actuator from the system. The jam override device **114** is typically a rotary that comprises a roller and a heart shape cam of which the roller is positioned at the cam detent and is preloaded by the spring force, depending on the type of jam override device. Alternatively, the jam override device may also be a linear type such as a pogo or a spring rod. As the control surface interface is turned against the resistance of a jammed actuator or linkage, the resulting force exceeds the detent force. The detent force is defined as the force threshold that causes the override device to slip. The detent force causes a relative motion of the two halves of the jam override device and thus isolates the jammed actuator or linkage from the system. It will also be noted that the illustration demonstrates redundant systems of control surface interfaces **102**, cables **108**, pulleys **110**, cable quadrants **112**, and linkages **109**. In this case, the jam override device **114** provides a similar function between redundant systems, when one system jams the jam override device **114** slips and removes the jammed portion of the system.

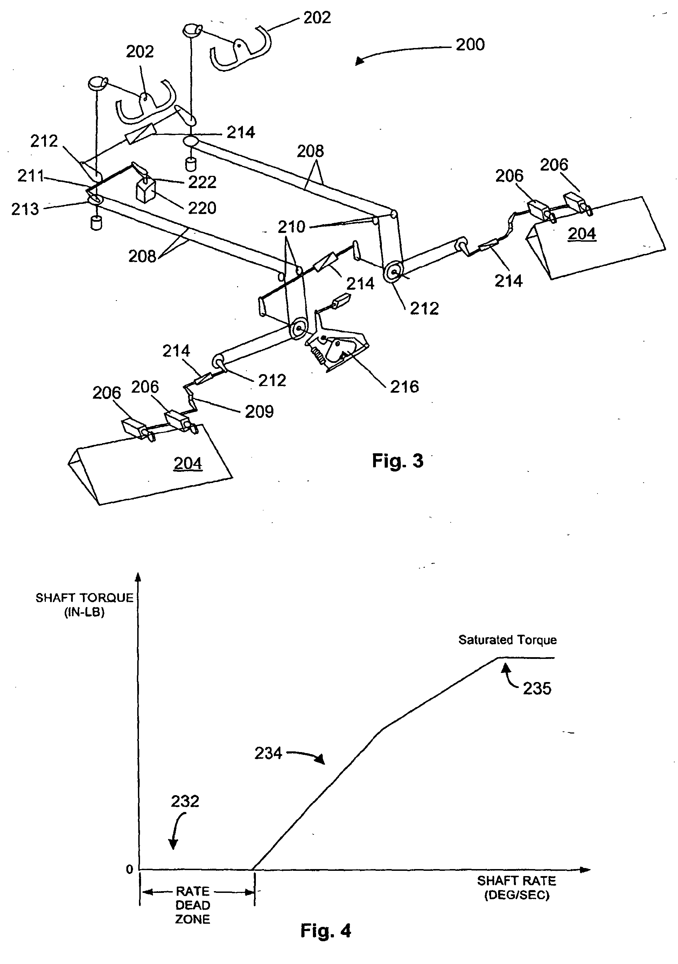

Referring concurrently to Figure 2, the aerodynamic control surfaces of a typical aircraft **120** include ailerons **122**, spoilers **124**, elevators **126**, flaps **128**, and rudders **130**. The control surface controller and method of controlling a control surface interface as described herein may be used in conjunction with any of these surfaces or any other control surface that provides aerodynamic properties to permit flight maneuvering. Figures 1 and 3 specifically illustrate control surface interfaces **112, 212** that are control wheels for operating control surfaces **104, 204,** however, this is by way of example only and not intended to limit the application of the invention to other control surface interfaces. Examples of such control surface interfaces include yokes, pedals, levers, and other similarly designated pilot aircraft interface devices.

Referring now to Figure 3 and in accordance with one embodiment of the present invention, a control surface controller **200** and method of controlling a control surface are provided. The control surface controller **200** includes a control surface interface **212**, as previously described, and further comprises a variable resistance damper **220**. The variable resistance damper **220** is interconnected to the control surface interface **202** via a four-bar linkage **211** and damper rotor **222**. The variable resistance damper **220** provides a variable physical resistance force to the control surface interface **202**.

In particular, the variable resistance damper **220** provides additional resistance to the control surface interface **202** proportional to the rate of movement of the control surface interface **202**. By way of example, the mechanical linkages from the control surface interface **202** operate a rotor **222** on the variable resistance damper **220**. The rotor shaft rate corresponds to the control surface interface **202** input rate. The torque on the rotor **222** is, in response, varied in proportion to the rate in order to provide resistance to the control surface interface 202. Therefore, by selectively controlling the torque on the rotor **222** proportionally to rotor shaft rate, and thus control surface interface input rate, the variable resistance damper **220** provides additional physical resistance to the interface **202.** When the rate dead zone limit **232** is selected with respect to the rate limits of the actuators and other factors relating to pilot-induced-oscillation, the control surface controller **200** may then prevent the cause of pilot-induced-oscillation at the source, namely the control surface interface **202.**

As such, the variable resistance damper **220** is incorporated into the control surface controller **200** such that feedback, the additional physical resistance, from the variable resistance damper **220** is provided directly to the control surface interface **202** in response to the control surface interface input rate. The control surface interface **202** is further interconnected to the control surface actuators **206** and aerodynamic control surfaces **204** via cables **208,** pulleys **210,** cable quadrants **212,** bar linkages **209,** and a feel system **216.** The control surface actuator **206,** therefore, positions the aerodynamic control surface **204** in a manner corresponding to the position of the control surface interface **202**, regardless of the variable resistance damper. Accordingly, this particular example of variable resistance damper **220** control for this embodiment of the control surface controller **200** and a method of controlling a control surface interface may be described as an open loop control system.

While this embodiment of a variable resistance damper provides open loop feedback, the selection of the magnitude and proportionality of the resistance in relation to the rate of input is nonetheless dependent upon the limiting rates of the control surface actuators 206 and the aerodynamic response of the aircraft in response to the corresponding movement of the aerodynamic control surfaces **204**. Designers of aircraft generally have mathematical models for determining how actuator rate limitations and other system parameters contribute to pilot-induced-oscillation. In applying these models to each specific system and aircraft, appropriate rate limits for each control surface and control surface interface may be selected. Consequently, pilot-induced-oscillation may be limited at its source, the control surface interface **202**. Also, the rate limit described herein is referred to as proportionally controlled, and proportionally controlled may include any number of desirable outcomes related to these models such that the torque of the damper **220** increases in relation to the rate of the control surface interface input.

It will also be noted that constraining the control surface interface **202** to within the maximum rate of the actuator **206** will also prevent undesirable slippage of the associated jam override devices **214**. In the prior art, such as in Figure 1, the control surface interface input rate could increase beyond the actuator rate so the actuator input lever contacts a mechanical stop. The stop contact condition and the control surface interface input force exceeds the detent force of the jam override device **114** will cause the override to slip and temporarily remove the actuator from operation, even though the actuator **106** was not actually jammed. However, referring again to Figure 3, when the control surface controller **200** and method of controlling a control surface interface of the present invention establishes physical resistance to the control surface interface **202** within the rate limits of the actuators **206**, so the mechanical stop contact events of the actuator input lever will mostly be eliminated and the jam override will not be caused to artificially slip. Furthermore, the control surface controller **200** and method of controlling a control surface interface of the present invention do not affect the normal operation of the jam override **214.**

While the control surface controller **200** and method of controlling a control surface interface have been described in conjunction with conventional cables, pulleys, and mechanical linkage systems for controlling control surface actuators and control surfaces, the foregoing principles may likewise be applied to electromechanical fly-by-wire control systems also used for the same purpose. For example, electrohydraulic servo actuators are used in conjunction with manual input systems, and one example includes fly-by-wire control systems. While fly-by-wire control systems may develop algorithms and software control schemes for limiting the effect of pilot-induced-oscillation, the control surface controller and method of controlling a control surface interface of the present invention may also be incorporated in order to provide a more effective response to the pilot through the control surface interface. Therefore, the control surface controller and method of controlling a control surface interface provide an aid to the pilot to consciously prevent pilot-induced-oscillation at the source, rather than singular reliance upon fly-by-wire control systems to limit the effect at the output.

Other applications of the control surface controller and method of controlling a control surface interface of the present invention may also be incorporated in order to limit or control the maximum servovalve rates. Electro-hydraulic servovalves are used in aircraft fly-by-wire flight control systems and each of which is under the control of an electrical command signal. The electrical command signal is produced as a result of the control surface controller or the autopilot control surface interface. Under transient conditions, the above system causes a hydraulic peak pressure that exceeds the maximum acceptable limit and results in a reduced fatigue life of the hydraulic tubing and other components. A typical approach utilizes an accumulator to limit the transient peak hydraulic pressure. Another approach increases the diameter size of the hydraulic tubing. Both add significant cost and weight, and the former adds maintenance requirements to the aircraft. The present invention, therefore, may be tailored to reduce the system gain that slows down the servovalve rate without degradation of normal actuator dynamic performance.

Likewise, the foregoing examples illustrate an open loop method for controlling a control surface interface, however, the same principles may be applied in conjunction with a closed loop system. For example, a closed loop control may additionally receive additional input data from fly-by-wire computer, from the control surface actuator, the aerodynamic control surface, an associated sensor, or any other mechanism or sensor that is related to controlling an aerodynamic control surface. As such, the feedback torque of the variable resistance damper may be modulated in proportion to the input rate plus any one or more of these other possible feedback mechanisms.

In one embodiment, it is advantageous to provide the proportional resistance only when the control surface interface **202** exceeds a threshold rate. Referring now to Figure 4 and with continued reference to Figure 3, there is illustrated one such desirable torque response **234** of the variable resistance damper **220** with respect to the rotor **222** shaft rate of the variable resistance damper. The shaft rate, of course, corresponds directly to the control surface input rate. As such, at lower input rates, the damper does not provide any additional damping to the control surface interface. This undamped area **232** represents the normal operation of the control surface interface where pilot-induced-oscillation either does not occur or does not occur to any undesirable magnitude. Such an area is determined from the physical response characteristics of the aerodynamic control surface **204**, the control surface actuator **206,** and the aerodynamic response of the aircraft to the movement of the control surface. Typically, these are based on the previously discussed pilot-induced-oscillation models and will vary from aircraft to aircraft. Therefore, these parameters will be well known to the aircraft control system designer following a case-by-case basis. A maximum torque **235**, or saturated torque, is typically prescribed at the maximum limits of the damper, and should be selected beyond the maximum expected torque applied to the control surface interface.

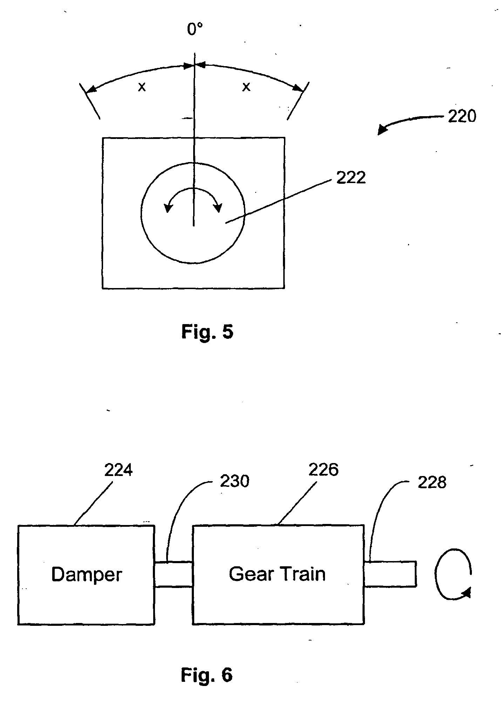

Referring now to Figure 5 and with continued reference to Figure 3, in another embodiment of the control surface controller **200** and a method of controlling a control surface interface it is desirable to provide a range of motion of the control surface interface **202** where the interface is undamped. For example, a nominal position of a control surface interface **202** corresponds to nominal positions of the control surfaces that it controls. A position of the rotor **222** on the damper corresponds to the nominal position and for ease of explanation is designated zero degrees. On either side of the nominal position, " *X* degrees, an undamped zone may be selected, and at *X* degrees a threshold position of damping is reached. The undamped zone of motion generally corresponds to control surface responses and aerodynamic responses where pilot-induced-oscillation does not occur or does not occur to any undesirable magnitude. Therefore, beyond the threshold position of the control surface interface, damping begins and is also proportional to the rate of control surface input, as described above and illustrated in Figure 4 for example.

Generally on a rotating machine, the required damper torque is more easily obtained or controlled at higher rotor shaft rates. Therefore, Figure 6 illustrates one advantageous embodiment of a variable resistance damper **224** that includes a gear train **226** having a gear reduction of the damper rotor **230** to an external rotor **228**. The external rotor **228** is mechanically linked to the control surface interface. Typically, these gears will comprise helical gears, spur gears, or planetary gear trains. As will be recognized by one of ordinary skill in the art, the specific gear type and gear ratio will be chosen according to the torque and physical resistance requirements of the control surface interface in comparison to the torque abilities of the damper **222** itself.

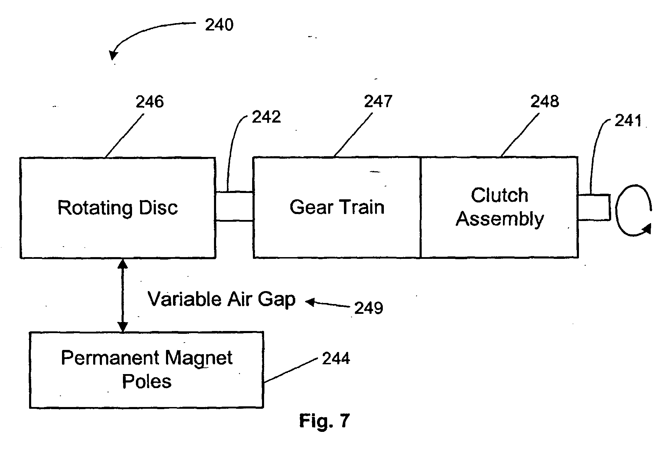

Referring now to Figure 7, one embodiment of the variable resistance damper includes an eddy current damper **240**, and, more specifically, a self-contained and self powered eddy current drag damper **240**. In this particular embodiment, an eddy current damper **240** consists of permanent magnetic poles **244** which place restraint on an electrically conductive rotating disc **246** via a variable air gap **242**.

The eddy current damper **240** is particularly well suited as a variable resistance damper due to the natural proportionality of the torque to revolution rate characteristic. In operation, the disc **246** rotates within the magnetic field of the magnetic poles **247** so that the direction of the magnetic flux passing through the disc **246** changes in the rotation direction. From Faraday?s law, the time-varying magnetic fields result in eddy current that circulates in the rotating disc **246** whereby a magnetic force in the reverse direction to the rotation direction of the disc **246** is generated under Fleming?s rule, thereby exerting a braking torque on the rotating disc **246**. The braking torque, as mentioned above, is controllable by adjusting the air gap **249** and the rate of rotor **242**. For a constant airgap **249**, the braking torque is substantially proportional to rotor speed. Therefore, the eddy current damper **240** embodiment of the variable resistance damper provides an advantageous self contained and self powered apparatus that does not require external electrical power sources, therefore retaining reliability of the damper independent of electrical power supplies.

The eddy current damper rotor **242** is connected to a gear train **247**, such as has been previously described. A slip type, self-re-engagement clutch assembly **248** is also provided upstream of the gear train **247** and acts as an overload protective device for the gear train and as a jam override device for the system. The external rotor **241** connected to the clutch then receives the input from the control surface interface **202** by way of the mechanical linkages **211**, **213**.

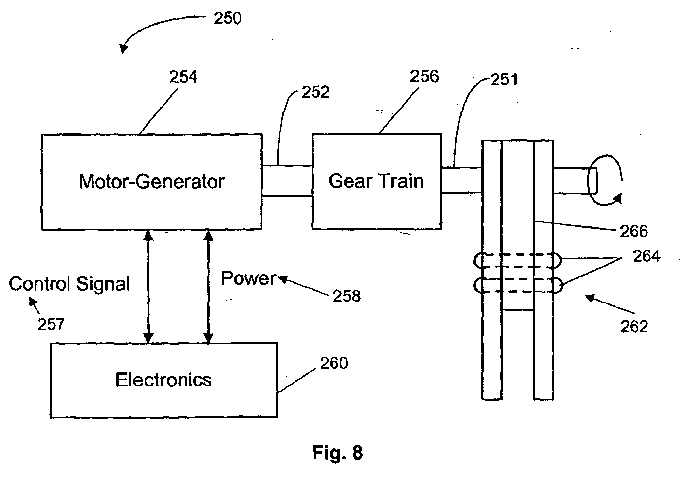

Referring now to Figure 8, another embodiment of the variable resistance damper includes an electrical motor, and, in one specific advantageous embodiment a self contained, self powered, and electronically controlled motor-generator **250**. The motor-generator portion **256** of the machine comprises a DC brushless motor. The rotor **252** contains an array of identical permanent magnets that provide a uniform dipole field. The windings of the motor **254** are on the stator. The stator windings are then "switched" or "commutated" to provide a DC motor-generator. The operation mode of a DC brushless motor is different from that of a typical DC motor in that the commutation of a brushless motor can be performed by electronic means using switching circuits rather than using brushes across a commutator from the rotor. Therefore, the undesired problems (i.e. brush wear, arcing, explosion, etc.) related to mechanical structure can be overcome by replacing the mechanical means with electronic means such as power semiconductor devices or ICs for signal processing so as to control the three-phase current of the DC brushless motor and achieve better operation characteristics.

The DC brushless motor is used as a generator to provide a control signal **257** and power supply **258** to the electronic control circuit **258**. The power supply **258** thus permits a self-contained and self powered unit. As the motor-generator operates as a generator, the current output is measured from the control signal **257**. As such, the measured value of the current is proportional to rotor rate, and thus proportional to control surface interface input rate. The electronic circuit **258** thus uses the control signal in a feedback manner to provide control of the stator commutation on the motor **256** to achieve the damping torque profile proportional to shaft rate, such as provided in Figure 4 for example. This is generally achieved by electronic circuitry **258** incorporating one or more static power switches or solid state relays comprising power diodes, power transistors, thyristors, or the like.

There are several advantages of this particular embodiment. First, the local electronic circuit **258** control can be performed at a high frequency to achieve fast damping engagement and fast damping dis-engagement that results in high fidelity force feedback functionality. Secondly, the process of optimizing the damping rate does not have to execute manually, as does the hydraulic damper. Instead the magnitude of damping may be adjusted while flying the airplane. Thirdly, certain damper maintenance checks can be performed by measuring the motor-generator output current. The measured value allows a determination of the damping parameters. Fourthly, the electronic circuit **258** also limits or saturates the damper output torque **235** so that overload protection is provided.

In one particularly advantageous embodiment, the rotor **252** of the motor-generator is connected to the control surface interface by mechanical linkages **211**, **213** and a gear train **256.** In this particular embodiment, the mechanical linkages include a crank assembly **262**. The crank assembly **262** attached to the damper input shaft has shearable rivets **264** that pass through a crank hub **266**. The shearable rivets **264** are capable of accommodating the damper torques. However when movement of the damper input shaft is encumbered the control surface input force produces a high stress concentration on the shearable rivets **264** causing them to shear and thereby enables the pilot to operate the control system.

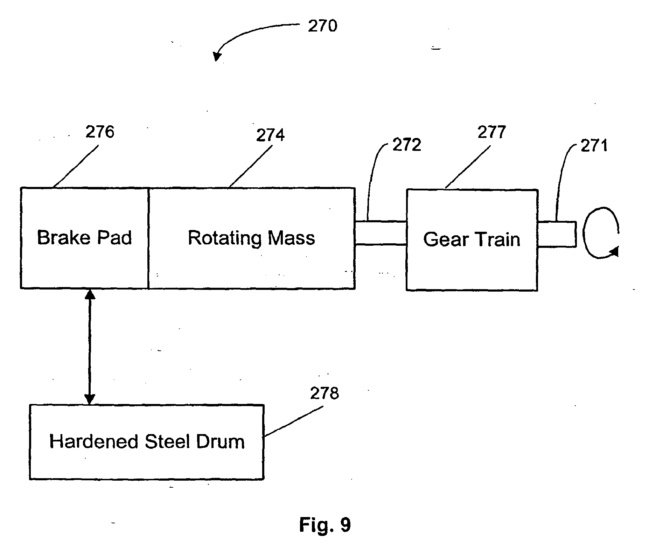

Referring now to Figure 9, another alternative embodiment of the variable resistance damper comprises a mechanical brake, and more specifically a self contained centrifugal friction braking mechanism **270**. In this particular advantageous embodiment, the centrifugal friction brake comprises a rotor **272** having centrifugally extending rotating mass **274** and brake pad **276.** The rotor **272** is connected to the control surface interface by mechanical linkages and a gear train. The extension of the mass **274** is generally controlled by rotor rate and an elastic element (not shown) between the rotor and the mass. As a result, the brake pad **276** is pressed against a hardened steel drum providing braking torque to the rotor **272**. Therefore, the initial damping threshold, as in Figure 4 for example, may be controlled through the preload on the elastic element. When the preload force is exceeded, the mass **274** then extends toward the drum **278**. Additionally, a torque versus rate characteristic, also as in Figure 4 for example, may be controlled by adjusting the mechanical advantage between the brake pad **276** and the rotating mass **274**, thus adjusting the braking torque. Additional masses may further be used to control the torque. A gear train, as described previously, also provides increased rotor speed. An external rotor **271** is then mechanically interconnected to the control surface interface **202**. Therefore, the centrifugal braking mechanism **270** advantageously provides a self contained and self-powered variable resistance damper.

Although it is advantageous to provide a self contained and self powered variable resistance damper in most applications, the principles illustrated herein are not necessarily limited to self-contained and self powered dampers. With respect to an eddy current damper, stator windings powered by an external power supply may be substituted for the described permanent magnets. In particular, electrically powered eddy current drag devices are used in the arts of motor clutches and brakes and have electrically excited stators that are controlled by circuitry to precisely vary developed torque in the rotor. With respect to a motor variable resistance damper, the electronics and/or the motor excitation may be powered by external power supply. Similarly, the electronics controlling motor excitation may be controlled in order to vary the toque versus rate characteristics as may be required. With respect to the mechanical brake, many other types of externally controlled brakes such as disc brakes, rim brakes, and other drum brakes may be substituted accordingly. These examples, and others, of variable resistance dampers that are not self contained or not self-powered may be used without departing from the scope of the present invention as defined by the claims.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An aircraft control surface controller (100, 200) for controlling aerodynamic control surfaces on an aircraft, comprising:
a control surface interface (102) having a range of motion for providing pilot input for positioning the aerodynamic control surfaces on an aircraft; and
a variable resistance damper (220) mechanically interconnected to the pilot control surface interface, the damper physical resistance increases proportional to a rate of movement of the control surface interface, **characterised in that** the variable resistance damper provides physical resistance to the control surface interface once the control surface interface exceeds an initial damping criterion corresponding to a predetermined rate of the control surface interface.

2. The aircraft control surface controller according to claim 1, further comprising an aerodynamic control surface (104, 122, 124, 126, 128, 130) responsive to the control surface interface.

3. The aircraft control surface controller according to claim 1 or 2, comprising: at least two aerodynamic control surfaces responsive to the control surface interface based on the pilot input.

4. The aircraft control surface controller according to claim 3, further comprising a jam override device (214) interconnecting one of the at least two control surfaces and the control surface interface, wherein the jam override device permits operation of one of the at least two control surfaces while the one control surface is in a jammed condition.

5. The aircraft control surface controller according to claim 4, wherein the jam override device has a preset detent force.

6. The aircraft control surface controller according to any of claims 1-5, wherein the variable resistance damper provides physical resistance to the control surface interface once the control surface interface exceeds a second initial damping criterion corresponding to a predetermined position of the control surface interface from a nominal position of the control surface interface.

7. The aircraft control surface controller according to any of claims 1-6, wherein the variable resistance damper initial damping criterion and physical resistance are selected based upon the physical response properties and aerodynamic effect properties of the control surfaces in response to the control surface interface.

8. The aircraft control surface controller according to any of claims 1-7, wherein the control surface is selected from the group consisting of an aileron, spoiler, rudder, and elevator.

9. The aircraft control surface controller according to any of claims 1-8, wherein the variable resistance damper comprises an electromagnetic damper (240, 250).

10. The aircraft control surface controller according to claim 9, wherein the electromagnetic damper comprises an eddy current drag device (240).

11. The aircraft control surface controller according to claim 9, wherein the electromagnetic damper comprises an electric motor (254).

12. The aircraft control surface controller according to claim 11, wherein the proportional resistance is established by electrically controlling a torque of the motor.

13. The aircraft control surface controller according to any of claims 9-12, wherein the electromagnetic damper further comprises a generator.

14. The aircraft control surface controller according to any of claims 1-13, wherein the variable resistance damper comprises a mechanical brake.

15. The aircraft control surface controller according to claim 14, wherein the mechanical brake comprises a centrifugal friction braking mechanism (270).

16. The aircraft control surface controller according to any of claims 1-15, further comprising a mechanical gear train (226) interconnecting the control surface interface and the variable resistance damper.

17. The aircraft control surface controller according to any of claims 1-16, further comprising a clutch interconnecting the control surface interface and the variable resistance damper.

18. The aircraft control surface controller according to any of claims 1-17, further comprising a rivet assembly capable of being sheared at a predetermined force, the rivet interconnecting the control surface interface and the variable resistance damper.

19. The aircraft control surface controller according to any of claims 1-18, further comprising mechanical linkages interconnecting the control surface interface and the control surface.

20. The aircraft control surface controller according to any of claims 1-19, further comprising electromechanical devices interconnecting the control surface interface and the control surface.

21. The aircraft control surface controller according to any of claims 1-20, wherein the variable resistance damper is self contained.

22. A method of controlling a control surface interface that controls an aerodynamic control surface on an aircraft, comprising:
receiving an input rate from the control surface interface; and
applying an increasing physical resistance to the control surface interface proportional to the input rate, **characterised in that** applying the increasing physical resistance occurs once the control surface interface has moved beyond an initial damping criteria, wherein at least one initial damping criteria corresponds to a predetermined input rate of the control surface interface.

23. The method according to claim 22, wherein applying the physical resistance occurs beyond initial damping criteria, and at least one initial damping criteria corresponds to a predetermined position of the control surface interface from a nominal position of the control surface interface.

24. The method according to claim 22 or 23, wherein the step of applying the physical resistance includes initial damping criteria that are selected based upon the physical response properties and aerodynamic effect properties of at least one aerodynamic control surface in response to the control surface interface.

## Patentansprüche

1. Steuerflächensteuerung (100, 200) für ein Flugzeug zum Steuern aerodynamischer Steuerflächen bei einem Flugzeug, umfassend:
eine Steuerflächenschnittstelle (102) mit einem Bewegungsbereich, damit eine Eingabe eines Piloten zur Einstellung der aerodynamischen Steuerflächen bei einem Flugzeug vorhanden ist; und
einen variablen Widerstandsdämpfer (220), welcher mechanisch mit der Steuerflächenschnittstelle des Piloten verbunden ist, wobei der physikalische Widerstand des Dämpfers proportional zu einer Bewegungsrate der Steuerflächenschnittstelle ansteigt,
**dadurch gekennzeichnet,**
**dass** der variable Widerstandsdämpfer der Steuerflächenschnittstelle einen physikalischen Widerstand bereitstellt, wenn die Steuerflächenschnittstelle einmal ein anfängliches Dämpfungskriterium übersteigt, welches einer vorbestimmten Rate der Steuerflächenschnittstelle entspricht.

2. Steuerflächensteuerung für ein Flugzeug nach Anspruch 1, weiter eine aerodynamische Steuerfläche (104, 122, 124, 126, 128, 130) umfassend, welche auf die Steuerflächenschnittstelle reagiert.

3. Steuerflächensteuerung für ein Flugzeug nach Anspruch 1 oder 2, umfassend: mindestens zwei aerodynamische Steuerflächen, welche auf der Grundlage der Eingabe des Piloten auf die Steuerflächenschnittstelle reagieren.

4. Steuerflächensteuerung für ein Flugzeug nach Anspruch 3, weiter eine Blockierungsübersteuerungsvorrichtung (214) umfassend, welche eine der mindestens zwei Steuerflächen und die Steuerflächenschnittstelle verbindet, wobei die Blockierungsübersteuerungsvorrichtung einen Betrieb einer der mindestens zwei Steuerflächen erlaubt während sich die eine Steuerfläche in einem blockierten Zustand befindet.

5. Steuerflächensteuerung für ein Flugzeug nach Anspruch 4, wobei die Blockierungsübersteuerungsvorrichtung eine voreingestellte Arretierungskraft aufweist.

6. Steuerflächensteuerung für ein Flugzeug nach einem der Ansprüche 1-5, wobei der variable Widerstandsdämpfer der Steuerflächenschnittstelle einen physikalischen Widerstand bereitstellt, wenn die Steuerflächenschnittstelle einmal ein zweites anfängliches Dämpfungskriterium übersteigt, welches einer vorbestimmten Stellung der Steuerflächenschnittstelle ausgehend von einer nominalen Stellung der Steuerflächenschnittstelle entspricht.

7. Steuerflächensteuerung für ein Flugzeug nach einem der Ansprüche 1-6, wobei das anfängliche Dämpfungskriterium und der physikalische Widerstand des variablen Widerstandsdämpfers auf der Grundlage der physikalischen Reaktionseigenschaften und der aerodynamischen Wirkungseigenschaften der Steuerflächen abhängig von der Steuerflächenschnittstelle ausgewählt sind.

8. Steuerflächensteuerung für ein Flugzeug nach einem der Ansprüche 1-7, wobei die Steuerfläche ausgewählt ist aus der Gruppe bestehend aus einem Querruder, einer Störklappe, einem Seitenruder und einem Höhenruder.

9. Steuerflächensteuerung für ein Flugzeug nach einem der Ansprüche 1-8, wobei der variable Widerstandsdämpfer einen elektromagnetischen Dämpfer (240, 250) umfasst.

10. Steuerflächensteuerung für ein Flugzeug nach Anspruch 9, wobei der elektromagnetische Dämpfer eine Wirbelstrombremsvorrichtung (240) umfasst.

11. Steuerflächensteuerung für ein Flugzeug nach Anspruch 9, wobei der elektromagnetische Dämpfer einen Elektromotor (254) umfasst.

12. Steuerflächensteuerung für ein Flugzeug nach Anspruch 11, wobei der proportionale Widerstand aufgebaut wird, indem ein Moment des Motors elektrisch gesteuert wird.

13. Steuerflächensteuerung für ein Flugzeug nach einem der Ansprüche 9-12, wobei der elektromagnetische Dämpfer weiter einen Generator umfasst.

14. Steuerflächensteuerung für ein Flugzeug nach einem der Ansprüche 1-13, wobei der variable Widerstandsdämpfer eine mechanische Bremse umfasst.

15. Steuerflächensteuerung für ein Flugzeug nach Anspruch 14, wobei die mechanische Bremse einen Zentrifugalreibungsbremsmechanismus (270) umfasst.

16. Steuerflächensteuerung für ein Flugzeug nach einem der Ansprüche 1-15, weiter einen mechanischen Getriebezug (226) umfassend, welcher die Steuerflächenschnittstelle und den variablen Widerstandsdämpfer verbindet.

17. Steuerflächensteuerung für ein Flugzeug nach einem der Ansprüche 1-16, weiter eine Kupplung umfassend, welche die Steuerflächenschnittstelle und den variablen Widerstandsdämpfer verbindet.

18. Steuerflächensteuerung für ein Flugzeug nach einem der Ansprüche 1-17, weiter eine Nietanordnung umfassend, welche um eine vorbestimmte Kraft geschert werden kann, wobei die Nietanordnung die Steuerflächenschnittstelle und den variablen Widerstandsdämpfer verbindet.

19. Steuerflächensteuerung für ein Flugzeug nach einem der Ansprüche 1-18, weiter ein mechanisches Gestänge umfassend, welches die Steuerflächenschnittstelle und die Steuerfläche verbindet.

20. Steuerflächensteuerung für ein Flugzeug nach einem der Ansprüche 1-19, weiter elektromechanische Vorrichtungen umfassend, welche die Steuerflächenschnittstelle und die Steuerfläche verbinden.

21. Steuerflächensteuerung für ein Flugzeug nach einem der Ansprüche 1-20, wobei der variable Widerstandsdämpfer in sich selbst geschlossen ist.

22. Verfahren zur Steuerung einer Steuerflächenschnittstelle, welche eine aerodynamische Steuerfläche bei einem Flugzeug steuert, umfassend:
Aufnahme einer Eingangsrate von der Steuerflächenschnittstelle; und
Aufbringen eines ansteigenden physikalischen Widerstands proportional zu der Eingangsrate auf die Steuerflächenschnittstelle,
**dadurch gekennzeichnet,**
**dass** das Aufbringen des ansteigenden physikalischen Widerstands auftritt, wenn sich die Steuerflächenschnittstelle einmal über ein anfängliches Dämpfungskriterium bewegt hat, wobei zumindest ein anfängliches Dämpfungskriterium einer vorbestimmten Eingangsrate der Steuerflächenschnittstelle entspricht.

23. Verfahren nach Anspruch 22, wobei das Aufbringen des physikalischen Widerstands nach einem anfänglichen Dämpfungskriterium auftritt und mindestens ein anfängliches Dämpfungskriterium einer vorbestimmten Stellung der Steuerflächenschnittstelle ausgehend von einer nominalen Stellung der Steuerflächenschnittstelle entspricht.

24. Verfahren nach Anspruch 22 oder 23, wobei der Schritt des Aufbringens des physikalischen Widerstands ein anfängliches Dämpfungskriterium umfasst, welches auf der Grundlage der physikalischen Reaktionseigenschaften und der aerodynamischen Wirkungseigenschaften mindestens einer aerodynamischen Steuerfläche als Reaktion auf die Steuerflächenschnittstelle ausgewählt ist.

## Revendications

1. Dispositif de commande pour gouverne d'aéronef (100, 200) pour commander de gouverne aérodynamique d'un aéronef, comprenant :
une interface de gouverne (102) présentant une plage de déplacement destinée à fournir à un pilote un moyen de positionnement de la gouverne aérodynamique d'un aéronef, et
un amortisseur à résistance variable (220) interconnecté mécaniquement à l'interface de gouverne du pilote, la résistance physique de l'amortisseur augmentant proportionnellement avec la vitesse de déplacement de l'interface de gouverne, **caractérisé en ce que** l'amortisseur à résistance variable offre une résistance physique à l'interface de gouverne lorsque l'interface de gouverne dépasse un critère d'amortissement initial correspondant à une vitesse prédéterminée de l'interface de gouverne.

2. Dispositif de commande pour gouverne d'aéronef selon la revendication 1, comprenant en outre une gouverne aérodynamique (104, 122, 124, 126, 128, 130) qui réagit en réponse à l'interface de gouverne.

3. Dispositif de commande pour gouverne d'aéronef selon la revendication 1 ou 2, comprenant : au moins deux gouvernes aérodynamique réagissant en réponse à l'interface de gouverne actionnée par le pilote.

4. Dispositif de commande pour gouverne selon la revendication 3, comprenant en outre un dispositif de protection anti-blocage (214) interconnectant l'une des au moins deux gouvernes et l'interface de gouverne, dans lequel le dispositif de protection anti-blocage permet la manoeuvre de l'une des au moins deux gouvernes lorsque l'une des gouvernes est bloquée.

5. Dispositif de commande pour gouverne d'aéronef selon la revendication 4, dans lequel le dispositif de protection anti-blocage possède une force d'arrêt prédéterminée.

6. Dispositif de commande pour gouverne d'aéronef selon l'une quelconque des revendications 1 à 5, dans lequel l'amortisseur à résistance variable offre une résistance physique à l'interface de gouverne lorsque l'interface de gouverne dépasse un second critère d'amortissement initial correspondant à une position prédéterminée de l'interface de gouverne à partir d'une position nominale de l'interface de gouverne.

7. Dispositif de commande pour gouverne d'aéronef selon l'une quelconque des revendications 1 à 6, dans lequel le critère d'amortissement initial de l'amortisseur à résistance variable et la résistance physique sont sélectionnés d'après les propriétés de réponse physique et les propriétés d'effet aérodynamique des gouvernes en réponse à l'interface de gouverne.

8. Dispositif de commande pour gouverne d'aéronef selon l'une quelconque des revendications 1 à 7, dans lequel la gouverne est sélectionnée dans le groupe constitué d'un aileron, d'un déporteur, d'un gouvernail de direction, et d'un gouvernail de profondeur.

9. Dispositif de commande pour gouverne d'aéronef selon l'une quelconque des revendication 1 à 8, dans lequel l'amortisseur à résistance variable comprend un amortisseur électromagnétique (240, 250).

10. Dispositif de commande pour gouverne d'aéronef selon la revendication 9, dans lequel l'amortisseur électromagnétique comprend un frein magnétique (240).

11. Dispositif de commande pour gouverne d'aéronef selon la revendication 9, dans lequel l'amortisseur électromagnétique comprend un moteur électrique (254).

12. Dispositif de commande pour gouverne d'aéronef selon la revendication 11, dans lequel la résistance proportionnelle est établie par commande électrique du couple du moteur.

13. Dispositif de commande pour gouverne d'aéronef selon l'une quelconque des revendication 9 à 12, dans lequel l'amortisseur électromagnétique comprend en outre un générateur.

14. Dispositif de commande pour gouverne d'aéronef selon l'une quelconque des revendication 1 à 13, dans lequel l'amortisseur à résistance variable comprend un frein mécanique.

15. Dispositif de commande pour gouverne d'aéronef selon la revendication 14, dans lequel le frein mécanique comprend un mécanisme de freinage par friction centrifuge (270).

16. Dispositif de commande pour gouverne d'aéronef selon l'une quelconque des revendication 1 à 15, comprenant en outre un train d'engrenages (226) interconnectant l'interface de gouverne et l'amortisseur à résistance variable.

17. Dispositif de commande pour gouverne d'aéronef selon l'une quelconque des revendication 1 à 16, comprenant en outre un embrayage interconnectant l'interface de gouverne et l'amortisseur à résistance variable.

18. Dispositif de commande pour gouverne d'aéronef selon l'une quelconque des revendication 1 à 17, comprenant en outre un ensemble de rivet pouvant être cisaillé à une force prédéterminée, ce rivet interconnectant l'interface de gouverne et l'amortisseur à résistance variable.

19. Dispositif de commande pour gouverne d'aéronef selon l'une quelconque des revendication 1 à 18, comprenant en outre des liaisons mécaniques interconnectant l'interface de gouverne et la gouverne.

20. Dispositif de commande pour gouverne d'aéronef selon l'une quelconque des revendication 1 à 19, comprenant en outre des dispositifs électromécaniques interconnectant l'interface de gouverne et la gouverne.

21. Dispositif de commande pour gouverne d'aéronef selon l'une quelconque des revendication 1 à 20, dans lequel l'amortisseur à résistance variable est autonome.

22. Procédé de commande d'une interface de gouverne qui commande la gouverne aérodynamique d'un aéronef, comprenant :
la réception de la vitesse d'actionnement depuis l'interface de gouverne ; et
l'application d'une résistance physique croissante à l'interface de gouverne proportionnelle à la vitesse d'actionnement, **caractérisée en ce que** l'application de cette résistance physique croissante a lieu lorsque l'interface de gouverne est mue au-delà d'un critère d'amortissement initial, au moins un critère d'amortissement initial correspondant à une vitesse d'actionnement prédéterminée de l'interface de gouverne.

23. Procédé selon la revendication 22, dans lequel l'application de la résistance physique a lieu au-delà du critère d'amortissement initial, et au moins un critère d'amortissement initial correspond à une position prédéterminée de l'interface de gouverne à partir d'une position nominale de l'interface de gouverne.

24. Procédé selon la revendication 22 ou 23, dans lequel l'étape d'application de la résistance physique comprend des critères d'amortissement initiaux qui sont sélectionnés d'après les propriétés de réponse physique et les propriétés d'effet aérodynamique d'au moins une gouverne aérodynamique en réponse à l'interface de gouverne.
